# EUROPEAN PATENT SPECIFICATION

(11) **EP 0 661 303 B1**
(45) Date of publication and mention of the grant of the patent: **17.03.1999**
(21) Application number: 94870211.3
(22) Date of filing: 28.12.1994
(51) Int. Cl.: C08F 110/06, C08F 4/646

(54) **Co-catalyst with a ziegler-natta catalyst for polydispersity control of polypropylene**
Co-Katalysator mit Ziegler-Natta-Katalysator zur Kontrolle der Polydispersität von Polypropylen
Co-catalyseur associé à un catalyseur Ziegler-Natta pour le contrôle de la polydispersité du polypropylène

(30) Priority: 29.12.1993 US 175005
(43) Date of publication of application: 05.07.1995
(73) Proprietor: FINA TECHNOLOGY, INC., Dallas, Texas 75206 (US)
(72) Inventor: Shamshoum, Edwar, Houston, Texas 77062 (US); Rauscher, David, Houston, Texas 77505 (US)
(74) Representative: Detrait, Jean-Claude

(56) References cited:
- EP-A- 0 178 982
- EP-A- 0 385 765
- Encyclopedia of Chemical Processing and Design, J.J. McKetta and W.A. Cunningham, Marcel Dekker, New York, 1977, Vol. 3, pages 32 and 33.

## Description

### BACKGROUND

**TECHNICAL FIELD**: The present invention provides a catalyst system for the polymerization of propylene that include the combination of a conventional supported Ziegler-Natta catalyst with isoprenylaluminum (IPRA) as a co-catalyst. This co-catalyst is used for improved polymerization control, specifically, to produce a polymer with narrower molecular weight distribution at specific co-catalyst\electron donor molar ratios.

**DESCRIPTION OF PRIOR ART:** Catalyst systems for the polymerization of olefins are well known in the art. Typically, these systems include a Ziegler-Natta type polymerization catalyst component; a co-catalyst, usually an organoaluminum compound; and an electron donor compound. Examples of such catalyst systems are shown in the following U.S. Patents: 4,107,413; 4,294,721; 4,439,540; 4,115,319; 4,220,554; 4,460,701; and 4,562,173; and EP Patents : 178,982 and 385,765. These are just a few of the scores of issued patents relating to catalysts and catalyst systems designed primarily for the polymerization of propylene and ethylene.

A Ziegler-Natta type polymerization catalyst is basically a complex derived from a halide of a transition metal, for example, titanium, chromium or vanadium, with a metal hydride and/or a metal alkyl that is typically an organoaluminum compound. The catalyst component is usually comprised of a titanium halide supported on a magnesium compound complexed with an alkylaluminum.

An electron donor compound is used in the polymerization reaction to reduce the atactic form of the polymer thereby giving control of and increasing the production of isotactic polymers. Although a broad range of compounds are known generally as electron donors, a particular catalyst may have a specific compound or group of compounds with which it is especially compatible.

The co-catalyst for a conventional supported Ziegler-Natta catalyst is an organoaluminum compound. Isoprenyl aluminum is known as a co-catalyst. U.S. Patent No. 4,657,998 discloses a catalyst system comprising a titanium-containing catalyst component, isoprenylaluminum and a halohydrocarbon for the production of polyethylene having a broad molecular weight distribution.

Narrower molecular weight distribution polyolefins are preferable in certain process and applications. It would be desirable to control molecular weight distribution or polydispersity directly through the variation of a process variable or modification of the catalyst system. Molecular weight distribution (MWD) can be represented as the ratio of the weight average molecular weight (M_{w}) to the number average molecular weight (Mₙ) : MWD = M_{w}/Mₙ. This ratio is also known as polydispersity.

### SUMMARY OF THE INVENTION

The present invention provides a process for the polymerization of propylene using the combination of a conventional supported Ziegler-Natta catalyst component with a specific co-catalyst which results in improved control of the properties of the polymer product, specifically polydispersity. The catalyst is preferably a conventional supported Ziegler-Natta catalyst comprising a complex of a magnesium compound support and a titanium halide. The co-catalyst is isoprenyl aluminum. In addition, the system may contain an organosilicon compound which acts as an electron donor. A preferred electron donor is a organosilicon compound of the following formula:

SiR'ₘ(OR")₄₋ₘ

where R' is an alkyl group, a cycloalkyl group, an aryl group or a vinyl group, R" is an alkyl group, m is 0-4, R' may be the same or different , R" may be the same or different. Specific examples of electron donors are diisopropyldimethoxy silane (DIDS), dicyclopentyldimethoxy silane (DCDS), cyclohexylisopropyldimethoxy silane (CIDS), di-t-butyl dimethoxy silane (DTDS) and cyclohexylmethyldimethoxy silane (CMDS). The preferred electron donor is CMDS.

The process for the polymerization of propylene comprises: contacting the conventional supported Ziegler-Natta polymerization catalyst with the co-catalyst which is isoprenyl aluminum; contacting the catalyst component with the co-catalyst to form a catalyst either simultaneously with or before contact with the electron donor the molar ratio isoprenyl aluminum/electron donor being at 10 to 50; optionally, pre-polymerizing the catalyst by contacting a small amount of propylene with the catalyst; and introducing the catalyst into a polymerization reaction zone containing propylene and, optionally, additional co-catalyst and electron donor. The process further comprises withdrawing a polymer product in which the polydispersity is in range of from 5 to 6.

### DETAILED DESCRIPTION OF THE INVENTION

This invention comprises the discovery of an appropriate type of co-catalyst which gives a polymer product with narrow molecular weight distribution at specific co-catalyst-electron donor molar ratios. It has been surprisingly discovered that a specific co-catalyst in combination with a particular type of catalyst component results in a polymer product with a relative small polydispersity over those previously known for this particular type of catalyst as well as other known catalyst systems.

The present invention relates to a catalyst and a process for polymerization of propylene using a particular co-catalyst with a particular type of catalyst. This combination results in a catalyst system that can be used in the polymerization of propylene to provide better control of the polydispersity of the polymer product than with other co-catalysts and a conventional supported Ziegler-Natta catalyst. These and other beneficial advantages will become more apparent from the following detailed description of the invention and the accompanying examples.

It has been discovered that a particular co-catalyst significantly enhances the catalytic properties of a conventional supported Ziegler-Natta catalyst component. The catalyst component comprises a compound preferably of the general formula MR⁺ₓ. where M is a transition metal, R is a halogen or a hydrocarbyloxy and x is the valence of the metal. Preferably, M is a Group IVB, VB or VIB metal, more preferably a Group IVB, and most preferably titanium. Preferably, R is chlorine, bromine, an alkoxy or a phenoxy, more preferably chlorine or ethoxy and most preferably, chlorine.

Illustrative examples of the transition metal compound catalyst components are TiCl₄, TiBr₄, TiI₄, Ti(OC₂H₅)₃Cl, Ti(OC₂H₅)Cl₃, Ti(OC₃H₇)₂Cl₂, Ti(OC₄H₉)₃Cl Ti(OC₆H₁₃)₂Cl₂, Ti(OC₈H₁₇)₂Br₂ and Ti(OC₁₂H₂₅)Cl₃, with TiCl₄ being preferred. Mixtures of the transition metal compounds may be used. No restriction on the number of transition metal compounds is made as long as at least one transition metal compound is present.

The support should be an inert solid which is chemically unreactive with any of the components of the conventional Ziegler-Natta catalyst. The support is preferably a magnesium compound. Examples of the magnesium compounds which are to be used to provide a support source for the catalyst component are magnesium halides, dialkoxymagnesiums, alkoxymagnesium halides, magnesium oxyhalides, dialkylmagnesiums, magnesium oxide, magnesium hydroxide, and carboxylates of magnesium.

One particular Ziegler-Natta catalyst which can be used in the present invention is a titanium-based catalyst for the polymerization of olefins as disclosed in U.S. Patent Nos. 4,927,797; 4,816,433 and 4,839,321. The catalyst comprises a solid catalyst component obtained by (i) suspending a dialkoxy magnesium in an aromatic hydrocarbon that is liquid at normal temperatures, (ii) contacting the dialkoxy magnesium with a titanium halide and further (iii) contacting the resulting composition a second time with the titanium halide, and contacting the dialkoxy magnesium with a diester of an aromatic dicarboxylic acid at some point during the treatment with the titanium halide in (ii).

The co-catalyst is isoprenyl aluminum which can be produced by the reaction of isoprene (2-methyl-1,3-butadiene) with triisobutylaluminum or diisobutyl aluminum hydride to from a viscous product having the approximate empirical formula (isoC₄H₉)ₓAl(C₅H₁₀)_{y} wherein y/x≥2 and containing typically 14.0 to 15.0% aluminum.

Electron donors are typically used in two ways in the formation of a Ziegler-Natta catalyst and a catalyst system. First, an internal electron donor may be used in the formation reaction of the catalyst as the transition metal halide is reacted with the metal hydride or metal alkyl.

The second use for an electron donor in a catalyst system is as an external electron donor or selectivity control agent (SCA) for stereoregulation in the polymerization reaction. A description of the two types of electron donors is provided in U.S. Patent 4,535,068. The same compound may be used in both instances, although typically they are different. A common external electron donor is an organic silicon compound, for example, cyclohexylmethyl dimethoxysilane (CMDS), as disclosed in U.S. Patent Nos. 4,927,797 and 5,066,738,

As the present invention relates particularly to external electron donors, the term "electron donor" as used herein, refers to the external electron donor or selectivity control agent. The external electron donor acts as a stereoregulator to control the amount of atactic form of polymer produced. It may also increase the production of isotactic polymers. Organic silicon compounds are known in the art for use as electron donors. Examples of electron donors that are organic silicon compounds are disclosed in U.S. Patent Nos. 4,218,339; 4,395,360; 4,328,122; 4,473,660 and 4,927,797.

A significant unexpected result obtained from the combination of the above-described catalyst and IPRA is the dramatic decrease in the polydispersity. The present invention provides a process for the polymerization of propylene using the catalyst and the electron donors described by the above formula comprising:
(a) making a catalyst by the steps comprising:
   (1) selecting a conventional Ziegler-Natta catalyst component;
   (2) contacting the catalyst component with an organoaluminum compound;
   (3) contacting the catalyst component with an electron donor as described above either simultaneously with or after step (2);
(b) introducing said catalyst into a polymerization reaction zone containing a propylene under polymerization conditions, and
(c) withdrawing a polymer product.

Although the catalyst system may be used in almost any commercially known polymerization process, the preferred process of the present invention includes a pre-polymerization of the catalyst by contacting a small amount of propylene with the catalyst after the catalyst has been contacted with the electron donor. A pre-polymerization process is described in U.S. Patent Nos. 4,767,735, and 5,122,583. As provided in those disclosures, a carrier stream for the catalyst is provided, the catalyst is contacted with the co-catalyst or organoaluminum compound, the catalyst is contacted with the electron donor, the catalyst stream is contacted with a relatively small amount of the total amount of propylene to be polymerized, the catalyst stream passes through a tubular reactor, and the pre-polymerized catalyst and catalyst stream are introduced into the polymerization reaction zone. The electron donor may be contacted with the catalyst simultaneously with the co-catalyst. A polymer product may then be withdrawn from the reactor. In using the described catalyst with the co-catalyst described above, the polymer product is characterized by a polydispersity of from 5 to 6.

The following Examples and Comparative Examples illustrate the present invention and its various advantages in more detail. The results are summarized in Tables 1-2. The catalyst used was prepared with the materials and processes as disclosed in U.S. Patent Nos. 4,927,797; 4,816,433 and 4,839,321.

| SUMMARY OF POLYMERIZATION CONDITIONS | |
|---|---|
| wt. of catalyst | 10⁻⁵ kg (100 mgrams) |
| amount of IPRA/TEAl (co-catalyst) | 1.0 mmoles |
| amount of CMDS (electron donor) | .01, .02, .05, .1 mmoles |
| Al/Ti | 200 |
| Al/Si | 100, 50, 20, 10 |
| Si/Ti | 2, 4, 10, 20 |
| Hydrogen | 16 mmoles |
| Propylene | 0.75 kg (750g) (1.4L) |
| Temp. | 70°C |
| Time | 3600 s (60 mins). |

### EXAMPLE 1 (outside the scope of the claims)

Prior to a polymerization run, all traces of moisture and air were expelled from a 2.10⁻³ m³ (2 L) reactor by heating to a temperature over 100°C for a minimum of 30 minutes under a constant purge of dry nitrogen. Following this heating, the reactor was cooled to room temperature (25°C) under nitrogen. The reactor was stabilized at room temperature and then 16 mmoles of hydrogen and 10⁻³ m³ (1.0 L) of propylene were added. The reactor was then stirred at 16.7 rps (1000 rpm). 1.0 mmole of IPRA and 0.01 mmoles of CMDS were added to a 4.10⁻⁵ m³ (40 cc) tubular reaction vessel. 10⁻⁵ kg (ten milligrams) of a commercially available Ziegler-Natta catalyst for the polymerization of olefins in mineral oil suspension were added to the 4.10⁻⁵ m³ (40 cc) reaction vessel. The IPRA and CMDS submixture was allowed to precontact approximately 300 s (five minutes), and the final mixture with catalyst was allowed to contact for approximately 120 s (two minutes) prior to use. The 4.10⁻⁵ m³ (40 cc) reaction vessel was then attached to an entry point on the 2.10⁻³ m³ (2 L) reactor and the catalyst mixture was flushed into the 2.10⁻³ m³ (2 L) reactor with room temperature liquid propylene. The reactor temperature was then raised to 70°C. The total amount of propylene present in the reactor was about 1.2 10⁻³ m³ (1.2 L). The polymerization reaction was allowed to proceed for 3600 s (one hour), at which point it was terminated by venting the excess propylene and cooling the reactor to room temperature. The reactor was then opened to collect the polymer product which was dried and analyzed. The efficiency of the catalyst was determined from the mass yield of polymer for the known amount of catalyst used. The Si/Ti mole ratio was calculated as the molar ratio of CMDS relative to the molar amount of catalyst. The xylene solubles were measured by dissolving the polymer in hot xylene, cooling the solution to 0°C and precipitating the insoluble polymer. The xylene solubles are the weight percentage of polymer that remained dissolved in the cold xylene. The molecular weight distribution of the polymer was characterized by gel permeation chromatography of filtered polymer samples dissolved in trichlorobenzene at 145°C. The molecular weight distribution or polydispersity (D) is given as the ratio of weight-average to number-average molecular weight (Mw/Mn). The polymerization results are tabulated in Table 1.

### EXAMPLE 2

The procedure of Example 1 was repeated, with the exception that the amount of CMDS was 0.02 mmoles. The polymerization results are tabulated in Table 1.

### EXAMPLE 3

The procedure of Example 1 was repeated, with the exception that the amount of CMDS was 0.1 mmoles. The polymerization results are tabulated in Table 1.

### COMPARATIVE EXAMPLES 1-3

The procedure of Example 1-3 were repeated, with the exception that TEAl was substituted for IPRA as the co-catalyst. The polymerization results are tabulated in Table 2.

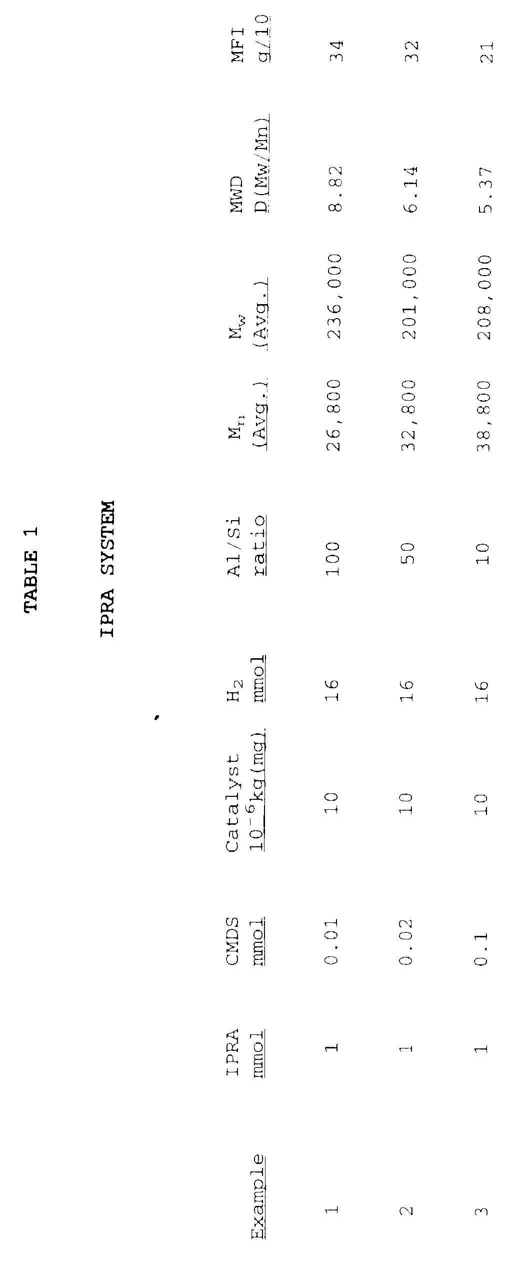

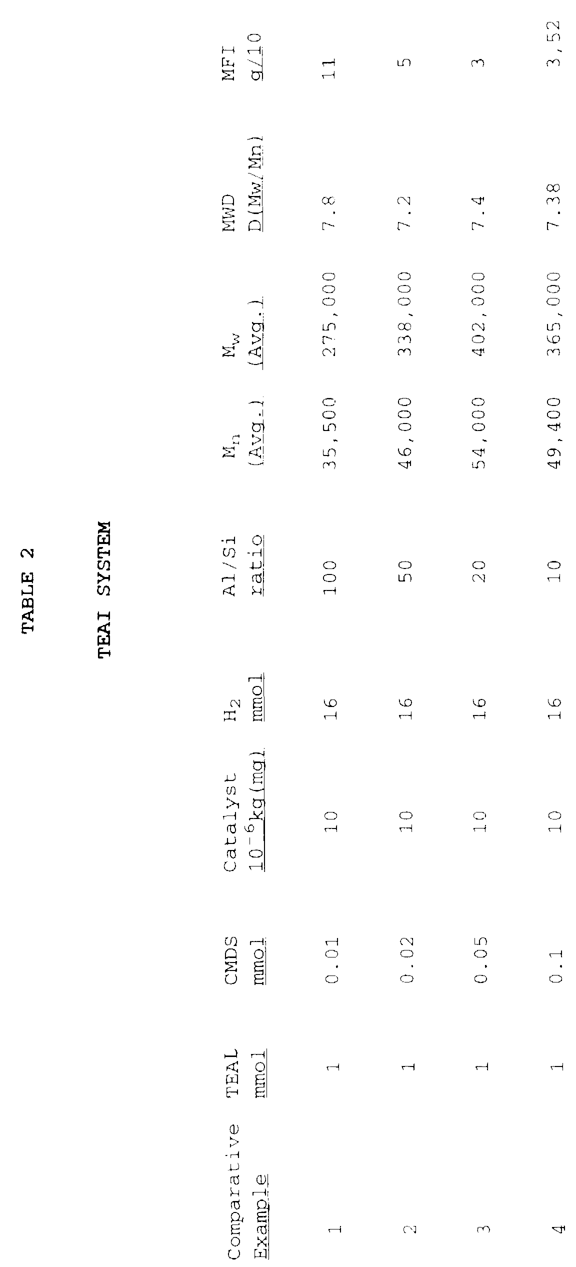

The results above demonstrate that the use of IPRA as a co-catalyst produces a polymer with a narrower molecular weight distribution at Al\Si molar ratios of less than or equal to 50. The use of IPRA as a co-catalyst produces a catalyst with increased hydrogen response, i.e., lower molecular wights are obtained under comparable polymerization conditions. There was an increase in melt flow index (MFI).

In addition, results above demonstrate that when using IPRA as a co-catalyst for propylene polymerization a polymer can be produced having different molecular weight distributions by varying the amount of electron donor. The polydispersity was controlled over a range from about 5 to about 9 from high donor level (Al/Si=10) to low donor level (Al/Si=100). Under similar conditions, varying donor levels had little, if any, effect on polydispersity when TEAl was used as a co-catalyst.

The results for IPRA as a co-catalyst show a consistent decrease of melt flow index and an increase of number-average molecular weights as the donor level is increased (Al/Si ratio decreased). However, the weight-average molecular weights are consistent with a decrease. In contrast, the results for TEAl as a co-catalyst show increase in both the number and weight-average molecular weights as the donor level is increased.

Obviously, numerous modifications and variations of the present invention are possible in light of the above teachings. It is therefore to be understood that within the scope of the appended claims, the invention may be practiced otherwise than as specifically described herein.

## Claims

1. A process for the polymerization of propylene, comprising:
(a) making a catalyst by the steps comprising:
(1) selecting a conventional supported Ziegler-Natta catalyst component; and
(2) contacting the catalyst component with an organoaluminum compound;
(3) contacting said catalyst component with an electron donor either simultaneously with or after step (2);
(b) introducing said catalyst into a polymerization reaction zone containing propylene under polymerization conditions, and
(c) withdrawing a polymer product having a polydispersity in a range of from 5 to 6;
characterised in that the organoaluminum compound is isoprenyl aluminum introduced in an amount such that its molar ratio to the electron donor of step (3) is in the range of 10 to 50.

2. The process for the polymerization of propylene as recited in Claim 1 wherein the catalyst component comprises a transition metal compound of the general formula MR⁺ₓ where M is a transition metal, R⁺ is a halogen or a hydrocarbyloxy and x is the valence of the metal.

3. A process for the polymerization of propylene as recited in Claim 2 wherein M is a Group IVB, VB or VIB metal.

4. A process for the polymerization of propylene as recited in Claim 3 wherein M is a Group IVB.

5. A process for the polymerization of propylene as recited in Claim 4 wherein M is titanium.

6. A process for the polymerization of propylene as recited in any of Claims 2 to 5 wherein R⁺ is chlorine, bromine, an alkoxy or a phenoxy.

7. A process for the polymerization of propylene as recited in Claim 6 wherein R⁺ is chlorine or ethoxy.

8. A process for the polymerization of propylene as recited in Claim 7 wherein R⁺ is chlorine.

9. A process for the polymerization of propylene as recited in Claim 2 wherein the transition metal compound is TiCl₄, TiBr₄, TiI₄, Ti(OC₂H₅)₃Cl, Ti(OC₂H₅)Cl₃, Ti(OC₃H₇)₂Cl₂,Ti(OC₄H₉)₃Cl Ti(OC₆H₁₃)₂Cl₂, Ti(OC₈H₁₇)₂Br₂ or Ti(OC₁₂H₂₅)Cl₃.

10. A process for the polymerization of propylene as recited in Claim 9 wherein the transition metal compound is TiCl₄.

11. A process for the polymerization of propylene as recited in any of the preceeding Claims wherein the preferred electron donor is a organosilicon compound of the following formula:
SiR' ₘ(OR")₄₋ₘ
where R' is an alkyl group, a cycloalkyl group, an aryl group or a vinyl group, R" is an alkyl group, m is 0-4, R' may be the same or different , R" may be the same or different.

12. The process of Claim 11 wherein said electron donor is diisopropyldimethoxy silane, dicyclopentyldimethoxy silane, cyclohexylisopropyldimethoxy silane, di-t-butyl dimethoxy silane or cyclohexylmethyldimethoxy silane.

13. The process of Claim 12 wherein said electron donor is cyclohexylmethyldimethoxysilane.

14. The process of Claim 1 further comprising:
pre-polymerizing said catalyst by contacting a small amount of propylene with said catalyst after step (c).

## Patentansprüche

1. Verfahren für die Polymerisation von Propylen, umfassend:
(a) Herstellen eines Katalysators durch die Stufen, umfassend:
(1) Auswählen einer herkömmlichen unterstützten Ziegler-Natta-Katalysatorkomponente und
(2) in Kontakt bringen der Katalysatorkomponente mit einer Organoaluminiumverbindung,
(3) in Kontakt bringen der Katalysatorkomponente mit einem Elektronendonor entweder gleichzeitig mit oder nach Stufe (2),
(b) Einführen des Katalysators in eine Polymerisationsreaktionszone, enthaltend Propylen unter Polymerisationsbedingungen und
(c) Abführen eines Polymerproduktes mit einer Polydispersität in einem Bereich von 5 bis 6,
dadurch gekennzeichnet, daß die Organoaluminiumverbindung Isoprenylaluminium ist, eingeführt in einer solchen Menge, daß ihr Molverhältnis zu dem Elektronendonor von Stufe (3) im Bereich von 10 bis 50 liegt.

2. Verfahren für die Polymerisation von Propylen nach Anspruch 1, wobei die Katalysatorkomponente umfaßt eine Übergangsmetallverbindung der allgemeinen Formel MR⁺ₓ, wobei M ein Übergangsmetall ist, R⁺ ein Halogen oder ein Hydrocarbyloxy ist, und x die Wertigkeit des Metalls ist.

3. Verfahren für die Polymerisation von Propylen nach Anspruch 2, wobei M ein Gruppe IVB, VB oder VIB Metall ist.

4. Verfahren für die Polymerisation von Propylen nach Anspruch 3, wobei M eine Gruppe IVB ist.

5. Verfahren für die Polymerisation von Propylen nach Anspruch 4, wobei M Titan ist.

6. Verfahren für die Polymerisation von Propylen nach einem der Ansprüche 2 bis 5, wobei R⁺ Chlor, Brom, ein Alkoxy oder ein Phenoxy ist.

7. Verfahren für die Polymerisation von Propylen nach Anspruch 6, wobei R⁺ Chlor oder Ethoxy ist.

8. Verfahren für die Polymerisation von Propylen nach Anspruch 7, wobei R⁺ Chlor ist.

9. Verfahren für die Polymerisation von Propylen nach Anspruch 2, wobei die Übergangsmetallverbindung TiCl₄, TiBr₄, TiJ₄, Ti(OC₂H₅)₃Cl, Ti(OC₂H₅)Cl₃, Ti(OC₃H₇)₂Cl₂, Ti(OC₄H₉)₃Cl, Ti (OC₆H₁₃)₂Cl₂, Ti(OC₈H₁₇)₂Br₂ oder Ti(OC₁₂H₂₅)Cl₃ ist.

10. Verfahren für die Polymerisation von Propylen nach Anspruch 9, wobei die Übergangsmetallverbindung TiCl₄ ist.

11. Verfahren für die Polymerisation von Propylen nach einem der vorhergehenden Ansprüche, wobei der bevorzugte elektronendonor eine Organosiliciumverbindung der folgenden Formel ist
SiR'ₘ(OR'')₄₋ₘ
wobei R' eine Alkylgruppe, eine Cycloalkylgruppe, eine Arylgruppe oder eine Vinylgruppe ist, R'' ist eine Alkylgrupe, m ist 0-4, R' kann gleich oder unterschiedlich sein, R'' kann gleich oder unterschiedlich sein.

12. Verfahren nach Anspruch 11, wobei der Elektronendonor Diisopropyldimethoxysilan, Dicyclopentyldimethoxysilan, Cyclohexylisopropyldimethoxysilan, di-t-Butyldimethoxysilan oder Cyclohexylmethyldimethoxysilan ist.

13. Verfahren nach Anspruch 12, wobei der Elektronendonor Cyclohexylmethyldimethoxysilan ist.

14. Verfahren nach Anspruch 1, ferner umfassend Vorpolymerisieren des Katalysators durch in Kontakt bringen einer geringen Menge von Propylen mit dem Katalysator nach Stufe (c).

## Revendications

1. Procédé pour la polymérisation du propylène, comprenant:
(a) réaliser un catalyseur par les étapes comprenant:
(1) la sélection d'un composant de catalyseur de Ziegler-Natta sur support; et
(2) la mise en contact du composant de catalyseur avec un composé d'organoaluminium;
(3) la mise en contact de ce composant de catalyseur avec un donneur d'électrons soit simultanément soit après l'étape (2);
(b) introduire ce catalyseur dans une zone de réaction de polymérisation contenant du propylène sous des conditions de polymérisation, et
(c) retirer un produit de polymère ayant une polydispersité dans un intervalle de depuis 5 à 6;
caractérisé en ce que le composé d'organoaluminium est l'isoprényl aluminium introduit en une quantité telle que son rapport molaire au donneur d'électrons de l'étape (3) est dans l'intervalle de 10 à 50.

2. Le procédé pour la polymérisation du propylène de la revendication 1, dans lequel le composant de catalyseur comprend un composé de métal de transition de la formule générale MR⁺ₓ où M est un métal de transition, R⁺ est un halogène ou un hydrocarbyloxy et x est la valence du métal.

3. Un procédé pour la polymérisation du propylène selon la revendication 2 où M est un métal du groupe IVB, VB ou VIB.

4. Un procédé pour la polymérisation du propylène selon la revendication 3 où M est un métal du groupe IVB.

5. Un procédé pour la polymérisation du propylène selon la revendication 4 dans lequel M est le titane.

6. Un procédé pour la polymérisation du propylène selon l'une quelconque des revendications 2 à 5 où R⁺ est le chlore, le brome, un alkoxy ou un phénoxy.

7. Un procédé pour la polymérisation du propylène selon la revendication 6 où R⁺ est le chlore ou un éthoxy.

8. Un procédé pour la polymérisation du propylène selon la revendication 7 où R⁺ est le chlore.

9. Un procédé pour la polymérisation du propylène selon la revendication 2 dans lequel le composé de métal de transition est TiCl₄, TiBr₄, TiI₄, Ti(OC₂H₅)₃Cl, Ti(OC₂H₅)Cl₃, Ti(OC₃H₇)₂Cl₂, Ti(OC₄H₉)₃Cl, Ti(OC₆H₁₃)₂Cl₂, Ti(OC₈H₁₇)₂Br₂ ou Ti(OC₁₂H₂₅)Cl₃.

10. Un procédé de polymérisation du propylène selon la revendication 9 dans lequel le composé de métal de transition est TiCl₄.

11. Un procédé de polymérisation du propylène selon l'une quelconque des revendications précédentes dans lequel le donneur d'électrons préféré est un composé d'organosilicium de la formule suivante:
SiR'ₘ(OR")₄₋ₘ
où R' est un groupe alkyle, un groupe cycloalkyle, un groupe aryle ou un groupe vinyle, R" est un groupe alkyle, m est 0-4, R' peut être le même ou différent, R" peut être le même ou différent.

12. Le procédé de la revendication 11 dans lequel ce donneur d'électrons est le diisopropyldiméthoxy silane, dicyclopentyldiméthoxy silane, cyclohexylisopropyl-diméthoxy silane, di-t-butyl diméthoxy silane ou le cyclohexylméthyl-diméthoxy silane.

13. Le procédé de la revendication 12 dans lequel ce donneur d'électrons est le cyclohexylméthyl-diméthoxysilane.

14. Le procédé de la revendication 1 comprenant en outre:
la pré-polymérisation de ce catalyseur par mise en contact d'une petite quantité de propylène avec ce catalyseur après l'étape (c).
